# FASCICULE DE BREVET EUROPEEN

(11) **EP 2 513 463 B1**
(45) Date de publication et mention de la délivrance du brevet: **11.09.2013**
(21) Numéro de dépôt: 10801606.4
(22) Date de dépôt: 29.11.2010
(51) Int. Cl.: F02K 1/72

(54) **Cadre avant pour une structure d'inverseur de poussée à grilles de déviation**
Unterbau für einen Kaskadenschubumkehreraufbau
Stub frame for a cascade thrust reverser structure

(30) Priorité: 18.12.2009 FR 0906158
(43) Date de publication de la demande: 24.10.2012
(73) Titulaire: Aircelle, 76700 Gonfreville l'Orcher (FR)
(72) Inventeur: BELLANGER, Alexandre, F-76600 Le Havre (FR); DUBOIS, Laurent, F-76620 Le Havre (FR); BOUILLON, Florent, F-76280 Anglesqueville L'esneval (FR); BARDIN, Stéphane, F-76620 Le Havre (FR)
(74) Mandataire: Gaillarde, Frédéric F. Ch.
(86) Numéro de dépôt international: PCT/FR2010/052556
(87) Numéro de publication internationale: WO 2011/073549

(56) Documents cités:
- EP-A2- 1 852 595
- FR-A1- 2 907 512
- FR-A1- 2 925 607
- US-A- 5 313 788
- US-A1- 2008 271 432

## Description

La présente invention concerne un cadre avant pour une structure d'inverseur de poussée à grilles de déviation pour une nacelle d'un aéronef.

L'invention concerne également une structure d'inversion de poussée à grilles de déviation et une nacelle comportant un tel cadre avant.

Un avion est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'inversion de poussée.

Plus précisément, une nacelle présente généralement une structure tubulaire comprenant une entrée d'air en amont du turboréacteur, une section médiane destinée à entourer une soufflante du turboréacteur, une section aval abritant les moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un canal annulaire, également appelé veine, formé entre un carénage du turboréacteur et une paroi interne de la nacelle. Les deux flux d'air sont éjectés hors du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue le canal annulaire du flux d'air froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux d'air froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles de déviation, également connu sous le nom d'inverseur à cascade, la réorientation du flux d'air est effectuée par des grilles de déviation associées à des volets d'inversion, le capot n'ayant qu'une simple fonction de coulissage visant à découvrir ou recouvrir les grilles de déviation. Les volets d'inversion forment des portes de blocage activées par le coulissement du capotage engendrant généralement une fermeture du canal annulaire en aval des grilles de manière à optimiser la réorientation du flux d'air froid.

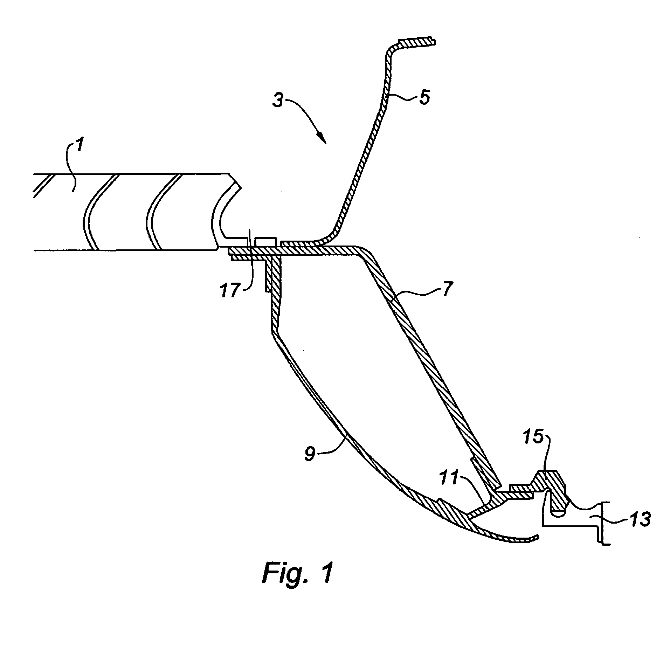

Généralement, les grilles de déviation 1 sont attachées au carter du turboréacteur et à la section médiane de la nacelle à l'aide d'un cadre avant 3 (voir figure 1). Les cadres avant 3 usuels comportent une multitude de pièces dont certaines sont réalisées dans un matériau composite et d'autres dans un matériau métallique.

Plus précisément, un cadre avant 3 usuel comporte un panneau avant 5 destiné à fixer la section médiane de la nacelle à un élément structural 7 appelé « voile conique » appartenant au cadre avant 3. Ledit élément structural 7 permet la tenue au feu. Le cadre avant 3 comporte également un élément de bord de déviation 9 assurant la ligne aérodynamique. Le panneau anneau avant 5 et l'élément structural 7 sont fixés ensembles.

Un anneau interne 11 permet de fixer une extrémité de l'élément structural 7 et une extrémité de l'élément de bord de déviation 9. Ledit anneau interne 11 permet également la fixation du cadre avant 3 au carter du turboréacteur par l'intermédiaire d'une pièce rapportée 15. Un anneau externe 17 permet la fixation de l'élément structural 7, de la grille de déviation 1 et de l'élément de bord de déviation 9.

Le cadre avant 3 comporte également des raidisseurs (non représentés).

Généralement, les raidisseurs, l'anneau interne 11 et l'anneau externe 17 sont réalisés dans un matériau métallique.

Le panneau avant 5, l'élément structural 7 et l'élément de bord de déviation 9 sont réalisés dans un matériau composite.

Le nombre de pièces nécessaires pour former un cadre avant ainsi que l'utilisation de différents types de matériaux complexifient la fabrication et l'installation dudit cadre avant. Un cadre avant pour une structure d'inverseur de poussée est aussi décrit dans le document US 2008/0271432.

Il existe donc un besoin de fournir un cadre avant pour une nacelle qui permet de réduire la masse, le coût de production et les pertes de charge.

Un but de la présente invention est donc de fournir un cadre avant pour une structure d'inverseur de poussée à grilles de déviation, plus simple à réaliser et présentant une masse plus faible.

A cet effet, selon un premier aspect, l'invention a pour objet un cadre avant pour une structure d'inverseur de poussée à grilles de déviation d'une nacelle d'un aéronef, ledit cadre avant étant destiné à être attaché à une ou plusieurs grilles de déviation et comprenant :
- une structure primaire monobloc de section longitudinale de forme sensiblement en C,
- une structure secondaire assurant la fonction de bord de déviation et fixée sur ladite structure primaire à une extrémité, et
- des raidisseurs transversaux reliant les deux extrémités de la structure primaire.

Le cadre avant de l'invention présente ainsi un nombre de pièces réduit par rapport à l'art antérieur. En outre, la diminution du nombre de pièces permet de réduire la masse, le coût de production et les pertes de charge et d'intégrer toutes les fonctions d'un cadre avant.

Le cadre avant de l'invention est donc plus simple à fabriquer et à installer que les cadres avant de l'art antérieur.

Selon d'autres caractéristiques de l'invention, le cadre avant de l'invention comporte l'une ou plusieurs des caractéristiques optionnelles suivantes considérées seules ou selon toutes les combinaisons possibles :
- la structure primaire, la structure secondaire et les raidisseurs sont réalisés dans un matériau composite ;
- le matériau composite est choisi parmi des matériaux à base de fibres de carbone, de fibres de verre, de fibres d'aramide ou un mélange de ces matériaux avec une résine époxy ou Bis-maleimide (BMI) ;
- la structure primaire et la structure secondaire sont réalisées en un seul bloc ;
- la structure primaire comporte une excroissance présentant une surface sensiblement plane configurée pour venir en contact avec une extrémité sensiblement plane de la grille de déviation ;
- l'excroissance est réalisée de matière avec la structure primaire ;
- un élément supplémentaire est rapporté sur la structure primaire et configurée pour permettre la fixation du cadre avant avec au moins une grille de déviation, ledit élément supplémentaire comportant des ouvertures dans lesquelles des excroissances appartenant à la structure primaire peuvent être introduites ;
- les raidisseurs transversaux et la structure primaire forment un espace comportant un matériau compact permettant de faciliter l'assemblage des raidisseurs et de la stucture primaire en formant un appui ;
- les raidisseurs transversaux sont monolithiques et ont une forme sensiblement en I, T ou de L inversé ;
- l'extrémité libre de la structure secondaire est configurée pour recevoir directement un carter de turboréacteur ce qui permet de supprimer une pièce intermédiaire permettant de rattacher un carter de turboréacteur au cadre avant de l'invention.

Selon un autre aspect, l'invention a pour objet une structure d'inverseur de poussée à grilles de déviation pour une nacelle d'un aéronef, ladite structure comprenant au moins une grille de déviation et au moins un cadre avant selon l'invention, le ou les cadres étant destinés à être reliés à une ou plusieurs grilles de déviation.

Préférentiellement, la ou les grilles de déviation comportent une extrémité destinée à être fixée avec un cadre avant, ladite extrémité présentant une forme de coude configurée pour venir en contact sur la structure primaire du cadre avant afin de permettre la fixation au travers des surfaces en contact.

Selon encore un autre aspect, l'invention a pour objet une nacelle comportant une structure d'inverseur de poussée selon l'invention.

L'invention sera davantage comprise à la lecture de la description non limitative qui va suivre, faite en référence aux figures ci-annexées.
- La figure 1 est une coupe longitudinale d'un cadre avant de l'art antérieur relié à une grille de déviation ;
- La figure 2 est une représentation schématique en coupe longitudinale d'un premier mode de réalisation d'une nacelle selon l'invention ;
- La figure 3 est une coupe longitudinale schématique d'un cadre avant de l'invention ;
- La figure 4 est une coupe longitudinale schématique d'un cadre avant de l'invention relié à une grille de déviation ;
- Les figures 5 à 7 sont des coupes longitudinales schématiques de variantes du mode de réalisation de la figure 4 ;
- Les figures 8 et 9 sont des vues en perspective d'un mode de réalisation d'un cadre avant de l'invention ;
- la figure 10 est une vue en perspective d'un mode de réalisation du cadre avant de l'invention associé à un ensemble de nervures et de support de vérin.

Une nacelle est destinée à constituer un logement tubulaire pour un turboréacteur double flux à grand taux de dilution et sert à canaliser les flux d'air qu'il génère par l'intermédiaire des pâles d'une soufflante, à savoir un flux d'air chaud traversant une chambre de combustion du turboréacteur, et un flux d'air froid circulant à l'extérieur du turboréacteur.

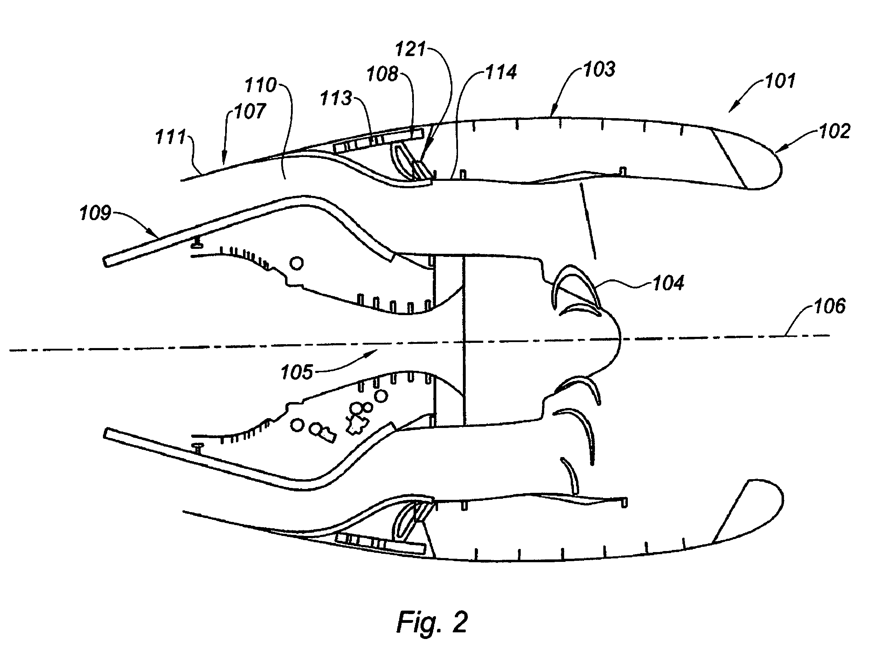

Plus précisément, selon le mode de réalisation représenté à la figure 2, une nacelle 101 comprend une structure amont d'entrée d'air 102, une section médiane 103 entourant une soufflante 104 d'un turboréacteur 105, et une section aval.

La nacelle 1 est de forme tubulaire d'axe longitudinal 106. On entend ainsi ici par « longitudinal » une direction sensiblement colinéaire à l'axe longitudinal de la nacelle. On entend ici par « transversal » une direction sensiblement perpendiculaire à l'axe longitudinal de la nacelle.

La section aval comporte de manière connue en soi une structure externe 107, dite OFS, abritant des moyens d'inversion de poussée 108, et une structure interne 109, dite IFS. La nacelle 101 est fixée en aval par l'intermédiaire de tout moyen approprié, notamment de bielles, à un mât de suspension, non représenté, destiné au rattachement de la nacelle 101 sous une aile d'aéronef.

La structure interne 109 est destinée à couvrir une partie aval du turboréacteur 105 s'étendant en aval de la soufflante de sorte à délimiter un canal annulaire pour le passage du flux d'air chaud.

La structure externe 106 et la structure interne 109 définissent également un autre canal annulaire 110 d'écoulement pour le flux d'air froid.

De manière plus précise, les moyens d'inversion de poussée 108 de la section aval comportent au moins un capot mobile 111 recouvrant des grilles de déviation 113. Les grilles de déviations 113 sont reliées à la section médiane 3 et au carter 114 du turboréacteur par l'intermédiaire du cadre avant 121 de l'invention.

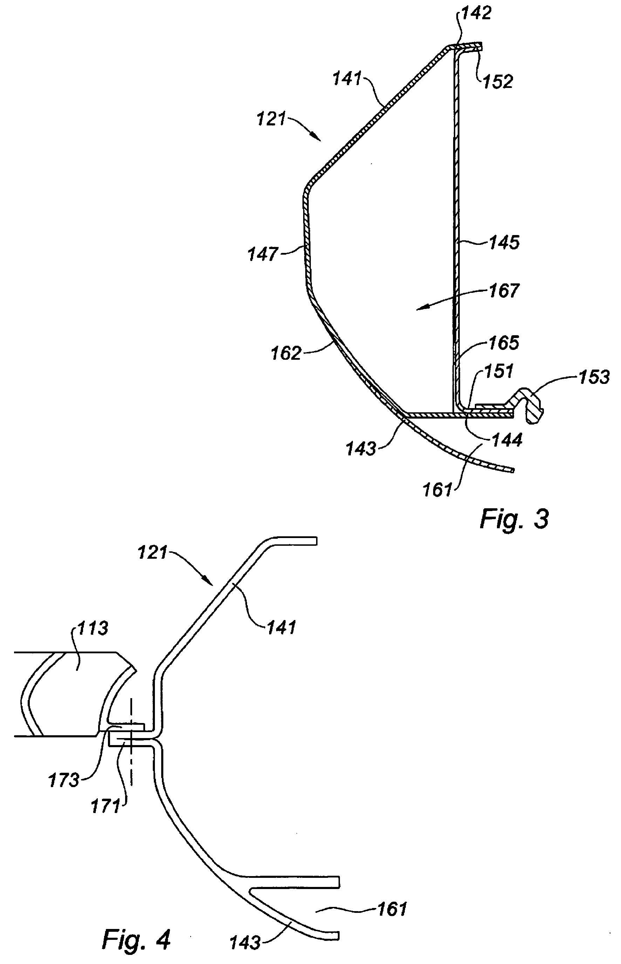

En particulier, comme illustré sur la figure 3, le cadre avant 121 de l'invention comprend :
- une structure primaire monobloc 141 de section longitudinale de forme sensiblement en C,
- une structure secondaire 143 assurant la fonction de bord de déviation et fixée sur ladite structure primaire 141 à une extrémité de sorte à définir un espace interne, et
- des raidisseurs transversaux 145 reliant les deux extrémités 142 et 144 de la structure primaire.

Le cadre avant de l'invention 121 présente ainsi un nombre d'éléments réduit par rapport à l'art antérieur. La réduction du nombre d'éléments formant le cadre avant de l'invention 121 permet de réduire la masse, le coût de production d'au moins 30% et les pertes de charge et également d'intégrer les fonctions présentes dans un cadre avant.

En particulier, le coût de l'assemblage des différents éléments formant le cadre avant de l'invention 121 est diminué.

Le cadre avant de l'invention 121 est donc plus simple à fabriquer que les cadres avant de l'art antérieur d'au moins 15% à 30%.

En outre, la résistance mécanique du cadre avant de l'invention 121 face aux sollicitations en fatigue est augmentée.

En outre, il n'est plus nécessaire d'avoir des fixations au niveau du bord de déviation du cadre avant de l'invention si bien que les pertes de charge sont diminuées.

La structure primaire 141, la structure secondaire 143 et les raidisseurs 145 sont préférentiellement réalisés dans un matériau composite ce qui permet d'alléger encore davantage la masse du cadre avant 121 de l'invention. L'utilisation d'un matériau composite permet d'envisager l'intégration de certaines fonctions telles que les chapes vérins.

Selon une autre variante, la structure primaire 141, la structure secondaire 143 et les raidisseurs 145 peuvent être réalisés dans un matériau métallique.

Le matériau composite est typiquement choisi parmi des matériaux à base de fibres de carbone, de fibres de verre, de fibres d'aramide ou un mélange de ces matériaux avec une résine époxy ou Bis-maleimide (BMI) ce qui permet d'assurer à la fois un allègement de la masse du cadre avant de l'invention 121 et également de garantir une résistance mécanique suffisante.

Le matériau composite peut être obtenu par drappage de tissus préimprégnés ou par un procédé dit LCM (« Liquid Composite Molding ») dans lequel la résine epoxy est mélangée à des tissus secs de carbone ou à une préforme tissée ou tressée, le cas échéant.

On entend ici par « section longitudinale de forme sensiblement en C » une forme pouvant s'inscrire dans un arc de cercle. Ainsi, la structure primaire 141 peut présenter une section longitudinale arrondie ou au contraire anguleuse.

Le fond 147 de la structure primaire, autrement dit le fond 147 du « C », est de forme sensiblement plate afin de faciliter la fixation de la structure primaire 141 et de la grille de déviation 113.

Les extrémités 142 et 144 de la structure primaire sont configurées pour venir en contact avec les raidisseurs 145 afin d'être fixés ensemble. Pour ce faire, les raidisseurs 145 peuvent comprendre des extremités 151 et 152 présentant une orientation différente de celle du corps de chaque raidisseur 145, notamment perpendiculaire audit corps.

L'extrémité 142 peut être sensiblement conique et l'extrémité 144 peut être sensiblement cylindrique.

Une pièce intermédiaire 153 peut être montée sur une extrémité 151 du raidisseur 145 et une extrémitié 144 de la structure primaire afin de permettre la fixation avec le carter 114 du turboréacteur.

La pièce 153 peut être annulaire ou semi annulaire.

La pièce 153 peut avoir une coupe longitudinale sensiblement en forme J.

La structure secondaire 143 a typiquement une forme sensiblement en arc de cercle de sorte à présenter un espace interne 161 avec la structure primaire 141.

L'extrémité libre de la structure secondaire 143 et l'extrémité 144 engagée avec la pièce intermédiaire 153 de la structure primaire ménagent l'espace interne 161.

Pour ce faire, ladite structure secondaire 143 peut présenter une partie 162 en contact avec une partie de la structure primaire 141 au niveau de l'extrémité de la structure secondaire 143 engagée dans la fixation avec la structure primaire 141.

Selon une variante non représentée, l'extrémité libre de la structure secondaire 143 peut être configurée pour recevoir directement le carter 114. Pour ce faire, ladite extrémité libre peut présenter une forme sensiblement complémentaire à la forme de l'extrémité du carter 114 venant se fixer sur la structure secondaire 143.

Ainsi, de manière avantageuse, on supprime toute pièce supplémentaire rapportée telle que la pièce 153 décrite ci-dessus.

Comme illustré sur la figure 3, la structure primaire 141 et la structure secondaire 143 peuvent être associées lors de la formation de ces structures 141 et 143, notamment lorsque ces dernières sont réalisées dans un matériau composite. Ainsi, la jonction entre la structure primaire 141 et la structure secondaire 143 peut être réalisée par collage avec la résine lors de l'injection de la résine dans le cas d'un procédé de fabrication de type RTM (« Resine Transfert Moulding »). Il est également possible de renforcer la jonction des deux structures piamire 141 et secondaire 143 par insertion de fils de carbone dans l'épaisseur de la préforme.

Selon une variante illustrée sur les figures 4 à 6, la structure primaire 141 et la structure secondaire 143 peuvent être réalisées en un seul bloc ce qui simplifie encore davantage la fabrication du cadre avant de l'invention 121.

Comme illustré sur la figure 3, les raidisseurs transversaux 145 et la structure primaire 141 sont agencés de sorte à former un espace 165. Ledit espace 165 peut comporter un matériau compact et léger ayant un rôle structural ou non mais permettant de faciliter l'assemblage des raidisseurs 145 et de la stucture primaire 141 en formant un appui. Ainsi, on peut citer comme matériau poreux une mousse telle que la mousse Rohacell 110WF® ou encore une structure de type nid d'abeille.

Afin de former l'espace 165, les raidisseurs transversaux 145 peuvent être sensiblement verticaux par rapport au cadre avant 121 de l'invention ou au contraire inclinés. Les raidisseurs transversaux 145 peuvent être monolithiques et de forme sensiblement en I, T ou de L inversé.

Comme illustré sur la figure 4, le cadre avant 121 de l'invention comporte une excroissance 171 présentant une surface sensiblement conique configurée pour venir en contact avec une extrémité 173 sensiblement plane d'une grille de déviation 11. Autrement dit, l'excroissance 171 peut être réalisée de matière avec la structure primaire 141. Pour ce faire, l'excroissance 171 peut être sous la forme d'un pli de la paroi formant le cadre avant 121 ou bien être sous la forme d'un bourrelet enserrant une structure à âme compacte telle qu'une âme alvéolaire ou poreuse. L'excroissance 171 peut être réalisée dans un matériau composite monolithique. Ainsi, de manière avantageuse, il n'est pas nécessaire de modifier les grilles de déviation usuellement employées.

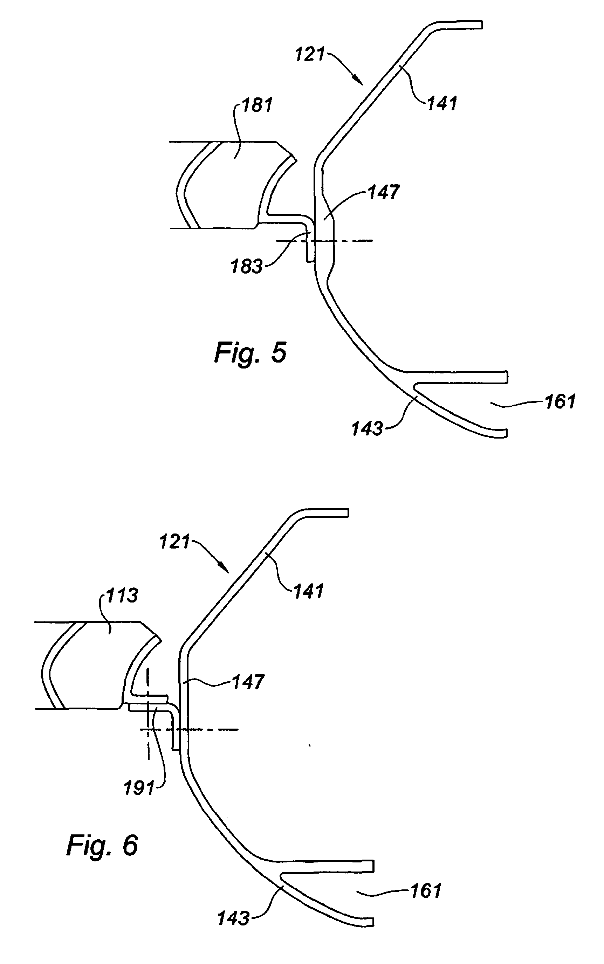

Selon une variante illustrée sur la figure 5, la grille de déviation 181 comporte une extrémité 183 destinée à être fixée avec le cadre avant 121 de l'invention, ladite extrémité 183 formant un coude configurée pour venir en contact sur la structure primaire 141 afin de permettre la fixation au travers des surfaces en contact. La fixation peut alors être réalisée par un ou plusieurs rivets, par exemple.

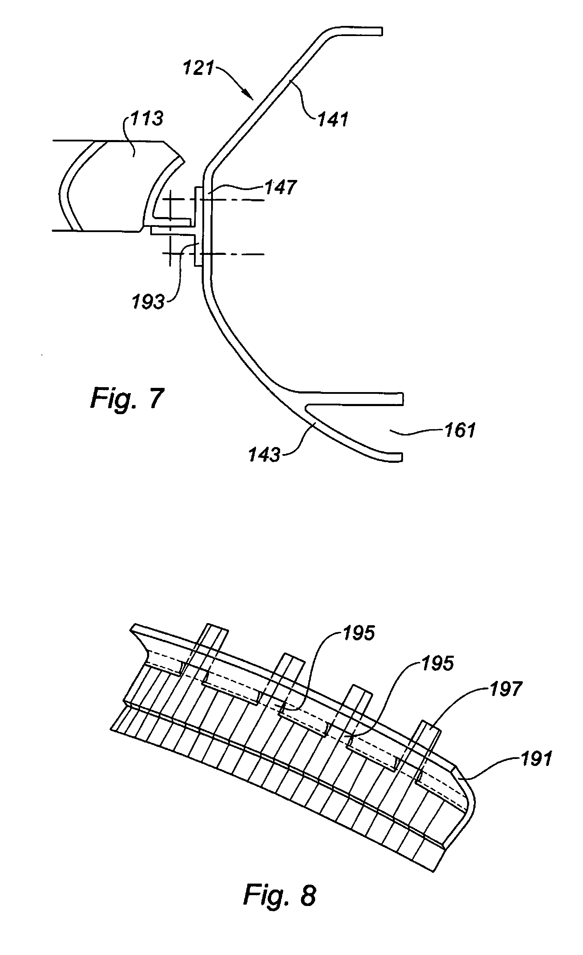

Selon encore une autre variante, il est possible d'employer une grille de déviation usuelle 113 et le cadre avant de l'invention 121 dans lequel un élément rapporté, notamment sensiblement en forme coudée 191 ou de T 193 (voir respectivement la figure 6 et la figure 7), assure la fixation entre la structure primaire 141 et ladite grille de déviation 113.

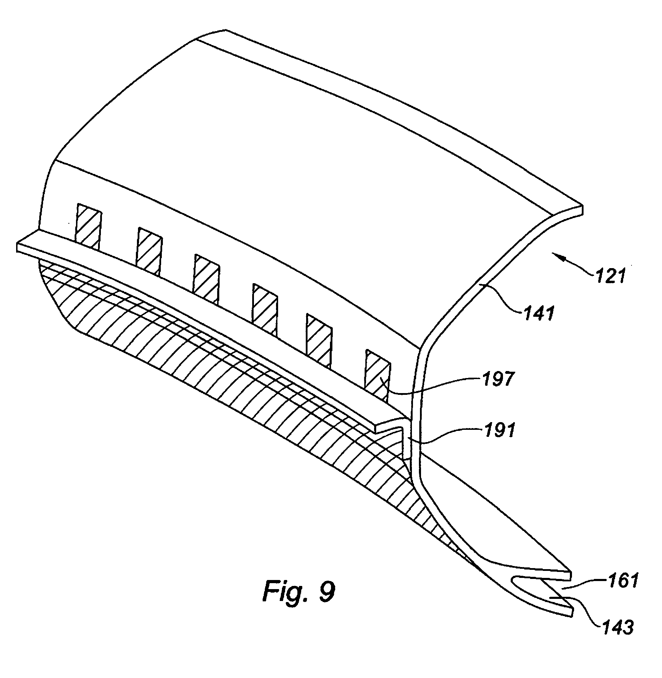

Selon le mode de réalisation illustré sur les figures 8 et 9, l'élément rapporté 191 et 193 peuvent présenter des ouvertures 195 au travers desquelles des excroissances appartenant à la grille de déviation 113 et/ou des excroissances 197 appartenant à la structure primaire 141 s'introduisent afin de garantir la fixation et le maintien de la grille de déviation 113 et du cadre avant de l'invention 121. De ce fait, la fixation et le maintien de la grille de déviation 113 et du cadre avant de l'invention 121 ne sont plus assurés par des éléments extérieurs rapportés, tels que des rivets, ou par une colle à appliquer. Le temps d'assemblage est donc réduit.

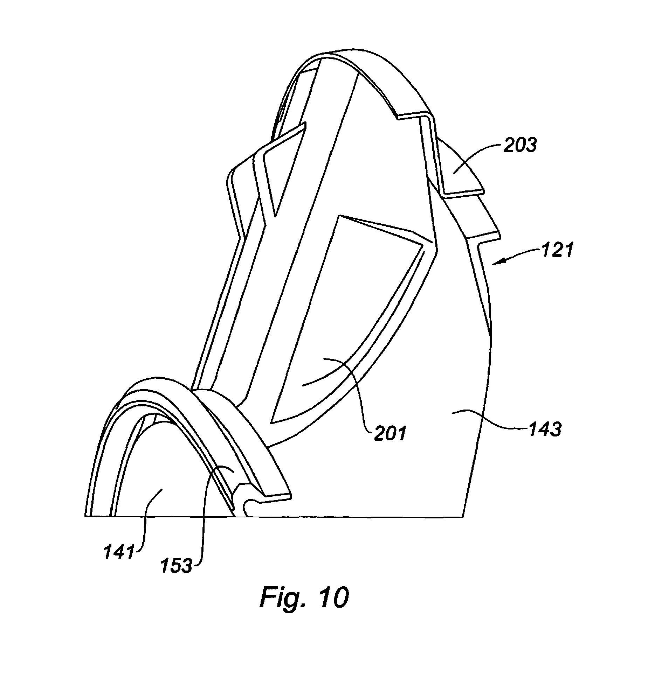

Comme illustré sur la figure 10, dans l'espace ménagé 161 entre l'extrémité libre de la structure secondaire 143 et l'extrémité 144 de la structure primaire engagée avec la pièce intermédiaire 153 peut comporter un ensemble de nervures et de support de vérin 201. Ledit ensemble peut être rapporté sur l'extrémité libre de la structure secondaire 143 par un élément 203.

Lorsque le cadre avant de l'invention 121 est réalisé dans un matériau composite, ce dernier peut être obtenu, par exemple, par un procédé dit « Résine Transfert Moulding » (RTM) utilisant une vessie ou un contre-moule rigide.

Selon une autre alternative, les éléments formant le cadre avant 121 peuvent être obtenus par infusion de la résine dans l'épaisseur et non dans le sens des fibres, comme cela est le cas dans le procédé RTM.

Il est également possible d'utiliser un procédé de drappage consistant à drapper des plis préimprégnés de résine sur un moule et à procéder à une cuisson à une température supérieure à 100°C.

## Revendications

1. Cadre avant (121) pour une structure d'inverseur de poussée à grilles de déviation d'une nacelle (101) d'un aéronef, ledit cadre avant (121) étant destiné à être attaché à une ou plusieurs grilles de déviation (113 ; 181) et comprenant :
- une structure primaire monobloc (141) de section longitudinale de forme sensiblement en C,
- des raidisseurs transversaux (145) reliant les deux extrémités (142, 144) de la structure primaire (141),
**caractérisé en ce qu'**il comprend
- une structure secondaire (143) assurant la fonction de bord de déviation et fixée sur ladite structure primaire (141) à une extrémité.

2. Cadre (121) selon la revendication précédente, dans lequel la structure primaire (141), la structure secondaire (143) et les raidisseurs (145) sont réalisés dans un matériau composite.

3. Cadre (121) selon la revendication précédente, dans lequel le matériau composite est choisi parmi des matériaux à base de fibres de carbone, de fibres de verre, de fibres d'aramide ou un mélange de ces matériaux avec une résine époxy ou Bis-maleimide.

4. Cadre (121) selon l'une quelconque des revendications précédentes, dans lequel la structure primaire (141) et la structure secondaire (143) sont réalisées en un seul bloc.

5. Cadre (121) selon l'une quelconque des revendications précédentes, dans lequel la structure primaire (141) comporte une excroissance (171) présentant une surface sensiblement plane configurée pour venir en contact avec une extrémité sensiblement plane (173) de la grille de déviation (113).

6. Cadre (121) selon la revendication précédente, dans lequel l'excroissance (171) est réalisée de matière avec la structure primaire (141).

7. Cadre (121) selon l'une quelconque des revendication 1 à 4, dans lequel un élément supplémentaire (191) est rapporté sur la structure primaire (141) et configurée pour permettre la fixation du cadre avant (121) avec au moins une grille de déviation (113), ledit élément supplémentaire (191) comportant des ouvertures (195) dans lesquelles des excroissances (197) appartenant à la structure primaire (141) peuvent être introduites.

8. Cadre (121) selon l'une quelconque des revendications précédentes, dans lequel les raidisseurs transversaux (145) et la structure primaire (141) forment un espace (167) comportant un matériau compact (165).

9. Cadre (121) selon l'une quelconque des revendications précédentes, dans lequel les raidisseurs transversaux (145) sont monolithiques et ont une forme sensiblement en I, T ou de L inversé.

10. Cadre (121) selon l'une quelconque des revendications précédentes, dans lequel l'extrémité libre de la structure secondaire (143) est configurée pour recevoir directement un carter (114) de turboréacteur.

11. Structure d'inverseur de poussée à grilles de déviation pour une nacelle (101) d'un aéronef, ladite structure comprenant au moins une grille de déviation (113 ; 181) et au moins un cadre avant (121) selon l'une quelconque des révendications précédentes, le ou les cadres avant (121) étant destinés à être reliés à une ou plusieurs grille de déviation (113 ; 181).

12. Structure selon la revendication précédente, dans lequel la ou les grilles de déviation (181) comportent une extrémité (183) destinée à être fixée avec un cadre avant (121), ladite extrémité (183) présentant une forme de coude configurée pour venir en contact sur la structure primaire (141) du cadre avant (121) afin de permettre la fixation au travers des surfaces en contact.

13. Nacelle (101) comportant une structure d'inverseur de poussée selon la revendication 11 ou 12.

## Patentansprüche

1. Vorderer Rahmen (121) für eine Schubumkehrstruktur mit Ablenkgittern einer Gondel (101) eines Luftfahrzeugs, wobei der vordere Rahmen (121) dazu bestimmt ist, mit einem oder mehreren Ablenkgittern (113; 181) verbunden zu sein und umfasst:
- eine primäre Monoblockstruktur (141) mit einem etwa C-förmigen länglichen Querschnitt,
- Querversteifungen (145), die die zwei Enden (142, 144) der primären Struktur (141) verbinden,
**dadurch gekennzeichnet, dass** er umfasst:
- eine sekundäre Struktur (143), die die Funktion eines Ablenkrands sichert und auf der primären Struktur (141) an einem Ende befestigt ist.

2. Rahmen (121) nach vorangehendem Anspruch, wobei die primäre Struktur (141), die sekundäre Struktur (143) und die Versteifungen (145) aus einem Verbundmaterial hergestellt sind.

3. Rahmen (121) nach vorangehendem Anspruch, wobei das Verbundmaterial aus Materialien auf der Basis von Karbonfasern, von Glasfasern, von Aramidfasern oder von einer Mischung dieser Materialien mit einem Expoxy- oder Bismaleimidharz ausgewählt ist.

4. Rahmen (121) nach einem der vorangehenden Ansprüche, wobei die primäre Struktur (141) und die sekundäre Struktur (143) in einem einzigen Block hergestellt sind.

5. Rahmen (121) nach einem der vorangehenden Ansprüche, wobei die primäre Struktur (141) eine Ausstülpung (171) aufweist, die eine etwa ebene Oberfläche aufweist, die konfiguriert ist, um mit einem etwa ebenen Ende (173) des Ablenkgitters (113) in Kontakt zu kommen.

6. Rahmen (121) nach vorangehendem Anspruch, wobei die Ausstülpung (171) mit der primären Struktur (141) einstückig hergestellt ist.

7. Rahmen (121) nach einem der Ansprüche 1 bis 4, wobei ein zusätzliches Element (191) auf der primären Struktur (141) angebracht ist und konfiguriert, um die Befestigung des vorderen Rahmens (121) mit mindestens einem Ablenkgitter (113) zu erlauben, wobei das zusätzliche Element (191) Öffnungen (195) aufweist, in die Ausstülpungen (197), die zur primären Struktur (141) gehören, eingearbeitet sein können.

8. Struktur (121) nach einem der vorangehenden Ansprüche, wobei die Querversteifungen (145) und die primäre Struktur (141) einen Raum (167) bilden, der ein kompaktes Material (165) aufweist.

9. Rahmen (121) nach einem der vorangehenden Ansprüche, wobei die Querversteifungen (145) monolithisch sind und etwa eine I-, T- oder umgekehrte L-Form haben.

10. Rahmen (121) nach einem der vorangehenden Ansprüche, wobei das freie Ende der sekundären Struktur (143) konfiguriert ist, um direkt ein Turbotriebwerksgehäuse (114) aufzunehmen.

11. Schubumkehrstruktur mit Ablenkgittern für eine Gondel (101) eines Luftfahrzeugs, wobei die Struktur mindestens ein Ablenkgitter (113; 181) und mindestens einen vorderen Rahmen (121) nach einem der vorangehenden Ansprüche umfasst, wobei der oder die vorderen Rahmen (121) dazu bestimmt sind, mit einem oder mehreren Ablenkgittern (113; 181) verbunden zu sein.

12. Struktur nach vorangehendem Anspruch, wobei das oder die Ablenkgitter (181) ein Ende (183) aufweisen, das dazu bestimmt ist, mit einem vorderen Rahmen (121) befestigt zu sein, wobei das Ende (183) eine Knieform aufweist, die konfiguriert ist, um auf der primären Struktur (141) des vorderen Rahmens (121) in Kontakt zu kommen, um die Befestigung anhand von Kontaktoberflächen zu erlauben.

13. Gondel (101), die eine Schubumkehrstruktur nach Anspruch 11 oder 12 aufweist.

## Claims

1. A stub frame (121) for a cascade thrust reverser structure of an aircraft nacelle (101), said stub frame (121) being designed to be attached to one or more cascades (113; 181) and comprising:
- a primary single-piece structure (141) with a substantially C-shaped longitudinal section,
- **characterized in that** it comprises transverse stiffeners (145) connecting the two ends (142, 144) of the primary structure (141),
- a secondary structure (143) acting as the cascade edge and fixed on said primary structure (141) at one end.

2. The frame (121) according to the preceding claim, wherein the primary structure (141), the secondary structure (143) and the stiffeners (145) are made from a composite material.

3. The frame (121) according to the preceding claim, wherein the composite material is chosen from among materials with a base of carbon fibers, glass fibers, aramid fibers or a mixture of said materials with an epoxy or bis-maleimide resin.

4. The frame (121) according to any one of the preceding claims, wherein the primary structure (141) and the secondary structure (143) are made in a single piece.

5. The frame (121) according to any one of the preceding claims, wherein the primary structure (141) includes a protuberance (171) having a substantially planar surface configured to come into contact with a substantially planar end (173) of the cascade (113).

6. The frame (121) according to the preceding claim, wherein the protuberance (171) is made integral with the primary structure (141).

7. The frame (121) according to any one of claims 1 to 4, wherein an additional element (191) is attached on the primary structure (141) and configured to allow the stub frame (121) to be fixed with at least one cascade (113), said additional element (191) including openings (195) in which protuberances belonging to said primary structure (141) can be inserted.

8. The frame (121) according to any one of the preceding claims, wherein the transverse stiffeners (145) and the primary structure (141) form a space (167) including a compact material (165).

9. The frame (121) according to any one of the preceding claims, wherein the transverse stiffeners (145) are monolithic and are substantially in the shape of an I, T, or upside-down L.

10. The frame (121) according to any one of the preceding claims, wherein the free end of the secondary structure (143) is configured to receive a turbojet engine casing (114) directly.

11. A cascade thrust reverser structure for an aircraft nacelle (101), said structure comprising at least one cascade (113; 181) and at least one front frame (121) according to any one of the preceding claims, the stub frame(s) (121) being designed to be connected to one or more cascades (113; 181).

12. The structure according to the preceding claims, wherein the cascade(s) (181) include an end (183) designed to be fixed with a front frame (121), said end (183) having a bent shape configured to come into contact on the primary structure (141) of the front frame (121) so as to allow fixing through the surfaces in contact.

13. A nacelle (101) including a thrust reverser structure according to claim 11 or 12.
